# EUROPÄISCHE PATENTANMELDUNG

(11) **EP 4 691 324 A1**
(43) Veröffentlichungstag der Anmeldung: **11.02.2026**
(21) Anmeldenummer: 25190515.4
(22) Anmeldetag: 18.07.2025
(51) Int. Cl.: A47J 31/42, A47J 31/52, A47J 42/50

(54) **BESTIMMEN EINES VORRATS AN KAFFEEBOHNEN FÜR EINE KAFFEEMÜHLE**

(30) Priorität: 09.08.2024 DE 102024207633
(71) Anmelder: BSH Hausgeräte GmbH, 81739 München (DE)
(72) Erfinder: Gallinger, Simon, 83301 Traunreut (DE); Huber, Lukas, 83329 Waging am See (DE); Garschhammer, Florian, 83349 Palling (DE); Schreiner, Thomas, 84544 Aschau am Inn (DE); Hinterstoisser, Alexander, 83454 Anger (DE)

(57) **Zusammenfassung**

Ein Verfahren zum Bestimmen eines Vorrats (115) von Kaffeebohnen (120) für eine Kaffeemühle (100) umfasst Schritte des Erfassens einer Reihe zeitlich beabstandeter Stromaufnahmen eines elektrischen Antriebsmotors der Kaffeemühle (100) während eines Mahlvorgangs; des Bestimmens einer Reihe von Wahrscheinlichkeiten, mit welcher der Vorrat (115) erschöpft ist, auf der Basis der bestimmten Stromaufnahmen mittels eines rückgekoppelten neuronalen Netzes; und des Bestimmens, dass der Vorrat (115) erschöpft ist, falls die Reihe von Wahrscheinlichkeiten eine vorbestimmte Eigenschaft aufweisen.

## Beschreibung

Die vorliegende Erfindung betrifft die Bestimmung eines Vorrats an Kaffeebohnen für einer Kaffeemühle. Insbesondere betrifft die Erfindung die Bestimmung, ob noch Kaffeebohnen für die Kaffeemühle zur Verfügung stehen.

In einem Behälter einer Kaffeemühle befinden sich Kaffeebohnen. Die Kaffeemühle kann Teil einer automatischen Kaffeemaschine sein, die dazu eingerichtet ist, verschiedene Kaffeespezialitäten automatisch oder teilautomatisch bereitzustellen. Die Kaffeemühle wird mittels eines elektrischen Antriebsmotors angetrieben. Zur Bestimmung, ob der Vorrat an Kaffeebohnen erschöpft ist, wird ein elektrischer Strom durch den Antriebsmotor bestimmt. Ein durchschnittlicher elektrischer Strom während einer vorbestimmten Anzahl zurückliegender Mahlvorgänge wird mit einem aktuellen elektrischen Strom verglichen. Ist eine Differenz der beiden Werte größer als ein vorbestimmter Wert, so wird darauf geschlossen, dass der Vorrat erschöpft ist.

Diese Vorgehensweise kann leicht umgesetzt werden, liefert aber nicht in allen Fällen eine korrekte Bestimmung. Außerdem kann es relativ lange dauern, bis der erschöpfte Vorrat bestimmt wird, sodass ein Benutzer bereits aufgrund des geänderten Betriebsgeräuschs der leer laufenden Kaffeemühle darauf schließen kann, dass der Vorrat erschöpft ist. So kann sich bei ihm der Eindruck einstellen, die Bestimmung des Vorrats wäre fehlerhaft.

Eine der vorliegenden Erfindung zu Grunde liegende Aufgabe besteht in der Bereitstellung einer verbesserten Technik zum Bestimmen eines Vorrats von Kaffeebohnen für eine Kaffeemühle. Die Aufgabe wird gelöst durch die Gegenstände der unabhängigen Ansprüche. Unteransprüche geben bevorzugte Ausführungsformen wieder.

Ein Verfahren zum Bestimmen eines Vorrats von Kaffeebohnen für eine Kaffeemühle umfasst Schritte des Erfassens einer Reihe zeitlich beabstandeter Stromaufnahmen eines elektrischen Antriebsmotors der Kaffeemühle während eines Mahlvorgangs; des Bestimmens einer Reihe von Wahrscheinlichkeiten, mit welcher der Vorrat erschöpft ist, auf der Basis der bestimmten Stromaufnahmen mittels eines rückgekoppelten neuronalen Netzes oder mittels eines baumbasierten Algorithmus; und des Bestimmens, dass der Vorrat erschöpft ist, falls die Reihe von Wahrscheinlichkeiten eine vorbestimmte Eigenschaft aufweisen.

Durch den vorgeschlagenen Einsatz einer Technik des maschinellen Lernens kann eine wesentliche genauere Bestimmung erreicht werden, ob der Kaffeemaschine noch Kaffeebohnen zur Verfügung stehen oder nicht. Die Bestimmung kann auch rascher als nach dem Stand der Technik erfolgen, sodass ein Signal, das auf den erschöpften Vorrat hinweist, mit geringer Verzögerung nach dem Erschöpfen des Vorrats bereitgestellt werden kann. Das Signal kann an einen Benutzer der Kaffeemühle gerichtet sein und den Benutzer dazu auffordern, in Antwort auf das Signal den Vorrat von Kaffeebohnen aufzufüllen. Das Signal kann auch an eine Steuervorrichtung der Kaffeemühle gerichtet sein und die Steuervorrichtung kann in Antwort auf das Signal beispielsweise den Antriebsmotor abschalten. Die Kaffeemühle ist bevorzugt Teil einer Kaffeemaschine, insbesondere einer automatischen Kaffeemaschine.

Das vorgeschlagene rückgekoppelte neuronale Netzwerk kann auch rekurrentes neuronales Netz (Recurrent Neural Network, RNN) genannt werden. Im Gegensatz zu einem Feedforward-Netz umfasst ein RNN Verbindungen von Neuronen einer Schicht zu Neuronen derselben oder einer vorangegangenen Schicht. Ein rekurrentes neuronales Netz hat ein Gedächtnis, weil es Informationen aus früheren Eingaben verwendet, um eine aktuelle Eingabe und Ausgabe zu beeinflussen. So können zurückliegende Beobachtungen des elektrischen Stroms durch den Antriebsmotor verbessert berücksichtigt werden. So können verbessert Wahrscheinlichkeiten bestimmt werden, die anzeigen, wie wahrscheinlich es gerade ist, dass der Vorrat erschöpft ist.

Der vorgeschlagene baumbasierte Algorithmus kann insbesondere mit geringem Speicherbedarf direkt in der Steuervorrichtung, der Kaffeebühle und/oder der Kaffeemaschine lauffähig implementiert werden, was insbesondere für eine Echtzeit-Bestimmung oder eine nahezu in Echtzeit arbeitende Bestimmung besonders vorteilhaft sein kann. Sie können insbesondere einen Decision Tree, Random Forest, Adaboost, XG Boost und/oder Explainable Boosting Machine umfassen.

Mit einer Datenverbindung zu einer Cloud oder einem anderen Endgerät (z.B. Smartphone), die einen ausreichend schnellen Datentransfer erlaubt, kann insbesondere die Bestimmung zumindest teilweise auch in der Cloud bzw. dem anderen Endgerät stattfinden und insbesondere zumindest Teile des rückgekoppelten neuronalen Netzes oder des baumbasierten Algorithmus dort implementiert sein.

Mit besonders leistungsfähigen Microcontrollern können insbesondere auch vergleichsweise sehr rechenintensive Modelle umfasst sein, wie z.B. Autoencoder, Variational Autoencoder (VAE) oder Convolutional Neuronal Networks (CNN), die eine besonders zuverlässige, schnelle und präzise Bestimmung ermöglichen.

Um auf der Basis der Reihe von Wahrscheinlichkeiten eine Entscheidung zu treffen, ob der Vorrat erschöpft ist oder nicht, können unterschiedliche Vorgehensweisen angewandt werden. Es ist zu beachten, dass auch mehrere Eigenschaften geprüft und Prüfungsergebnisse miteinander kombiniert werden können. Üblicherweise wird dabei eine ODER Verknüpfung gewählt, sodass bestimmt wird, dass der Vorrat erschöpft ist, falls die Serie - oder ein Wert der Serie - wenigstens eine von mehreren vorbestimmten Eigenschaften aufweist. Alternativ können mehrere Ergebnisse auch mittels UND miteinander verknüpft werden, sodass alle vorbestimmten Eigenschaften vorliegen müssen, um zu bestimmen, dass der Vorrat erschöpft ist.

In einer Ausführungsform umfasst die Eigenschaft das Überschreiten eines vorbestimmten Schwellenwerts. Sollte beispielsweise eine bestimmte Wahrscheinlichkeit mehr als ca. 0,7 betragen, so kann bestimmt werden, dass der Vorrat erschöpft ist. Der Schwellenwert kann auch höher gewählt werden, um eine inkorrekte Bestimmung des Erschöpfens verbessert auszuschließen. Der Schwellenwert kann leicht empirisch bezüglich beobachteten Wahrscheinlichkeiten bestimmt werden.

In einer weiteren Ausführungsform umfasst die Eigenschaft, dass ein Gradient der Serie einen vorbestimmten Wert übersteigt. So kann die Eigenschaft beispielsweise vorliegen, wenn der Gradient mehrerer Wahrscheinlichkeiten ca. 0,6 übersteigt. Üblicherweise werden mehr als zwei Wahrscheinlichkeiten der Bildung des Gradienten zu Grunde gelegt, um eine gewisse Störungsfestigkeit zu erreichen. Optional kann das Merkmal umfassen, dass der bestimmte Anstieg wenigstens über eine vorbestimmte Zeit vorliegt.

So kann beispielsweise der Gradient über die vergangenen zwei Sekunden bestimmt und mit dem Schwellenwert verglichen werden.

Das rückgekoppelte neuronale Netz umfasst bevorzugt ein LSTM (Long Term Short Memory) Netz. Mit einem LSTM kann das Problem des verschwindenden Gradienten herkömmlicher RNN gelöst werden. Seine relative Unempfindlichkeit gegenüber einer Lückenlänge von Werten ist ein bedeutender Vorteil gegenüber anderen RNNs, Hidden Markov-Modellen und anderen Sequenzlernmethoden. Es zielt darauf ab, ein Kurzzeitgedächtnis für RNN bereitzustellen, das theoretisch unbegrenzt viele Bestimmungen überdauern kann, also ein "langes Kurzzeitgedächtnis" repräsentiert, das für die Klassifizierung, Verarbeitung oder Vorhersage von Daten auf der Grundlage von Zeitserien geeignet ist. Durch den Einsatz des LSTM kann die Erkennung des Erschöpfens des Vorrats von Kaffeebohnen in der Reihe der bestimmten Stromwerte stark verbessert werden.

In einer besonders bevorzugten Ausführungsform umfasst das Netz eine Schicht mit vier LSTM-Zellen. Jeder der Zellen kann der bestimmte elektrische Strom als Eingangswert bereitgestellt werden. Ausgangswerte jeder Zelle können in einer letzten Schicht (Dense Layer) zusammengefasst werden. Die letzte Schicht kann auch als vollverbundene Schicht (Fully Connected Layer) bezeichnet werden und hat bevorzugt eine sigmoide Aktivierung. Die Schicht ist bevorzugt dazu eingerichtet, Eingangsdaten abstrakt zu repräsentieren. Durch die mittels dieser Schicht erfolgende Zusammenfassung können die LSTM-Bestimmungen zusammengefasst, gewichtet und bewertet werden, um die Wahrscheinlichkeit, dass der Vorrat erschöpft ist, zu bestimmen.

Das rückgekoppelte neuronale Netz ist weiter bevorzugt auf der Basis von Mahlvorgängen trainiert, bei denen der Vorrat während des Mahlvorgangs erschöpft, von Anfang an erschöpft ist oder gar nicht erschöpft. Dazu wird ein Trainingsverfahren vorgeschlagen, bei dem eine Anzahl Mahlvorgänge mit unterschiedlich großen Mengen Kaffeebohnen durchgeführt wird.

Beispielsweise kann der Vorrat gezielt so klein gewählt werden, dass er nicht ausreicht, um einen üblichen Mahlvorgang abzuschließen. Werden beispielsweise ca. 12 g Kaffeebohnen in einem Mahlvorgang gemahlen, so kann der Vorrat in unterschiedlichen Durchgängen mit ca. 3 g, ca. 6 g und ca. 9 g angesetzt werden, um das Erschöpfen zu unterschiedlichen Zeitpunkten während des Mahlvorgangs zu provozieren. Eine größere oder kleinere Anzahl unterschiedlicher Mengen ist ebenfalls möglich. Vorteilhaft werden auch Mahlvorgänge mit erschöpftem Vorrat und mit unerschöpflichem Vorrat durchgeführt. Es empfiehlt sich, zu jeder Menge ungefähr gleich viele Trainingsdaten zu verwenden.

Gemäß einer weiteren Verfeinerung werden die Mahlvorgänge mit unterschiedlichen Mahlgraden durchgeführt. Üblicherweise genügen bereits ca. drei verschiedene Mahlgrade (fein / mittel / grob), um das RNN in einem zu erwartenden Nutzungsspektrum zu trainieren. Eine abweichende Anzahl unterschiedlicher Mahlgrade ist ebenfalls möglich. Die berücksichtigten Mahlgrade sind bevorzugt im Wesentlichen gleich verteilt in den Trainingsdaten.

Optional können Trainingsdaten unter weiteren Einflussfaktoren gesammelt bereitgestellt werden, um beispielsweise unterschiedliche Mahlwerke, Mahlwerke mit unterschiedlichen Toleranzen oder Verschleißgraden, unterschiedliche Kaffeebohnen oder unterschiedliche Umgebungsbedingungen zu reflektieren.

Es hat sich gezeigt, dass eine gute Erkennung des Erschöpfens bereits auf der Basis eines RNN erfolgen kann, das mittels Datensätzen in der Größenordnung von ca. 100 trainiert wurde. Bei Verwendung einer größeren Anzahl Datensätze können unter Umständen bessere Bestimmungen erzielt werden. Passende Trainingsdaten können auf die beschriebene Weise systematisch bereitgestellt werden. Ein Aufwand, um die Trainingsdaten bereitzustellen, ist überschaubar. Eine Qualität der Bestimmung mittels des RNN kann auf der Basis weiterer Trainingsdaten bestimmt werden. Bevorzugt werden etwa so viele Daten zur Qualitätsbestimmung verwendet wie zum Trainieren.

Nach einem weiteren Aspekt der vorliegenden Erfindung umfasst eine Steuervorrichtung für eine Kaffeemühle einen Sensor zur Erfassung einer Stromaufnahme eines elektrischen Antriebsmotors der Kaffeemühle; und eine Verarbeitungseinrichtung. Dabei ist die Verarbeitungseinrichtung dazu eingerichtet, eine Reihe zeitlich beabstandeter Stromaufnahmen des Antriebsmotors während eines Mahlvorgangs zu erfassen; auf der Basis der bestimmten Stromaufnahmen mittels eines rückgekoppelten neuronalen Netzes oder mittels eines baumbasierten Algorithmus eine Reihe von Wahrscheinlichkeiten zu bestimmen, mit welcher der Vorrat erschöpft ist; und zu bestimmen, dass der Vorrat erschöpft ist, falls die Reihe von Wahrscheinlichkeiten eine vorbestimmte Eigenschaft aufweisen.

Die Verarbeitungseinrichtung kann dazu eingerichtet sein, ein hierin beschriebenes Verfahren teilweise oder vollständig auszuführen. Dazu kann die Verarbeitungseinrichtung elektronisch ausgeführt sein und beispielsweise einen programmierbaren Mikrocomputer oder Mikrocontroller umfassen. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden und umgekehrt.

Die Steuervorrichtung kann ferner eine Ausgabevorrichtung zur Bereitstellung eines Hinweises auf einen erschöpften Vorrat umfassen. Die Ausgabevorrichtung kann an einen Benutzer des Geräts gerichtet sein und beispielsweise eine optische, eine akustische und/oder eine haptische Einrichtung umfassen. Ferner kann die Ausgabevorrichtung eine Schnittstelle umfassen, die zu einer weiteren Steuervorrichtung führt. Der Hinweis kann in Form eines elektrischen oder logischen Signals bereitgestellt werden.

Nach noch einem weiteren Aspekt der Erfindung umfasst eine Kaffeemühle eine hierin beschriebene Steuervorrichtung. Die Kaffeemühle kann Teil einer Kaffeemaschine sein, die bevorzugt dazu eingerichtet ist, teil- oder vollautomatisch Kaffeebohnen zu mahlen und aufzubrühen, um eine Kaffeespezialität bereitzustellen.

Die Erfindung wird nun unter Bezug auf die beiliegenden Figuren genauer beschrieben, in denen:
- Figur 1: eine Kaffeemühle in einer Kaffeemaschine;
- Figur 2: eine Steuervorrichtung für eine Kaffeemühle sowie ein Verfahren zum Bestimmen, ob ein Vorrat an Kaffeebohnen für eine Kaffeemühle erschöpft ist; und
- Figur 3: eine beispielhafte Darstellung von Erkennungen des Erschöpfens darstellen.

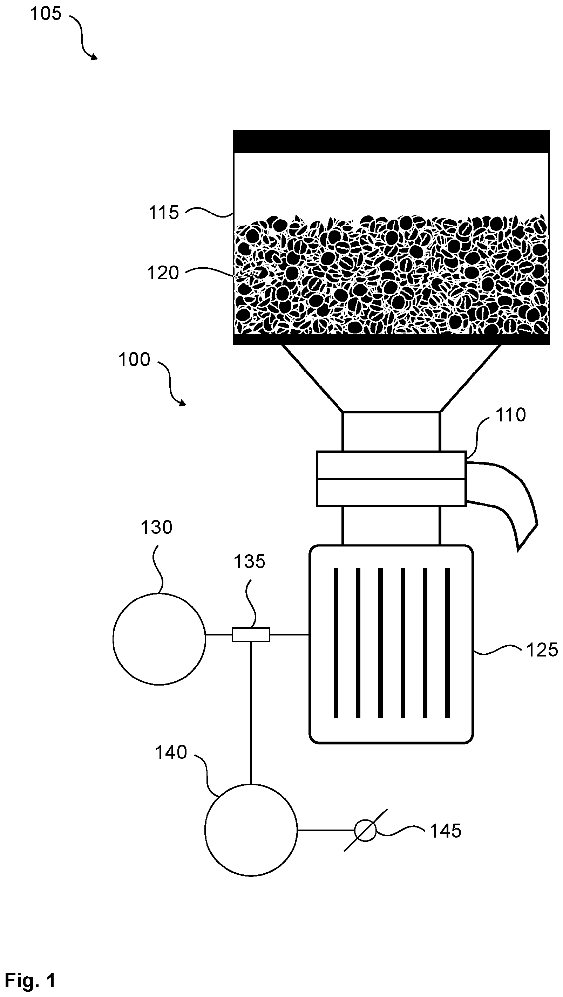

Figur 1 zeigt eine schematische Darstellung einer Kaffeemühle 100. Die Kaffeemühle 100 kann Teil einer Kaffeemaschine 105 sein, die bevorzugt automatisch arbeiten kann, um ein Kaffeegetränk bereitzustellen. Die Kaffeemühle 100 umfasst ein Mahlwerk 110, das aus einem Behälter 115 mit Kaffeebohnen 120 versorgt wird. Ein elektrischer Antriebsmotor 125 ist zum Antrieb des Mahlwerks 110 vorgesehen. Der Antriebsmotor 125 wird mittels eines Steuergeräts 130 gesteuert, wobei die Steuerung insbesondere ein Ein- und Ausschalten des Antriebsmotors 125 umfassen kann. In einer Ausführungsform wird der Antriebsmotor 125 abgeschaltet, nachdem eine vorbestimmte Zeit nach dem Einschalten verstrichen ist. die Dauer kann abhängig von einem Mahlgrad sein, der am Mahlwerk 110 eingestellt werden kann. In einer anderen Ausführungsform wird der Antriebsmotor 125 abgeschaltet, wenn eine vorbestimmte Menge Kaffeebohnen 120 zu Kaffeepulver gemahlen wurde bzw. wenn eine vorbestimmte Menge Kaffeepulver bereitgestellt wurde.

Eine Stromaufnahme des Antriebsmotors 125 kann mittels eines Sensors 135 bestimmt werden. Der Sensor 135 ist vorliegend als Längswiderstand (Shunt) in einer Stromleitung des Antriebsmotors 125 ausgeführt. In unterschiedlichen Ausführungsformen wird der Antriebsmotor 125 mit Gleich- oder Wechselspannung betrieben.

Eine Steuervorrichtung 140 ist dazu eingerichtet, auf der Basis einer Serie von bestimmten Strömen, die durch die Antriebsmaschine 125 fließen, zu bestimmen, ob der Vorrat an Kaffeebohnen 120 erschöpft ist oder nicht. Ein Bestimmungsergebnis kann mittels einer Ausgabevorrichtung 145 bereitgestellt werden. Die Ausgabevorrichtung 145 kann beispielsweise eine Signalleuchte umfassen. Alternativ kann eine Meldung auf einer grafischen, symbolischen oder textuellen Anzeige bereitgestellt werden, wenn der Vorrat erschöpft ist.

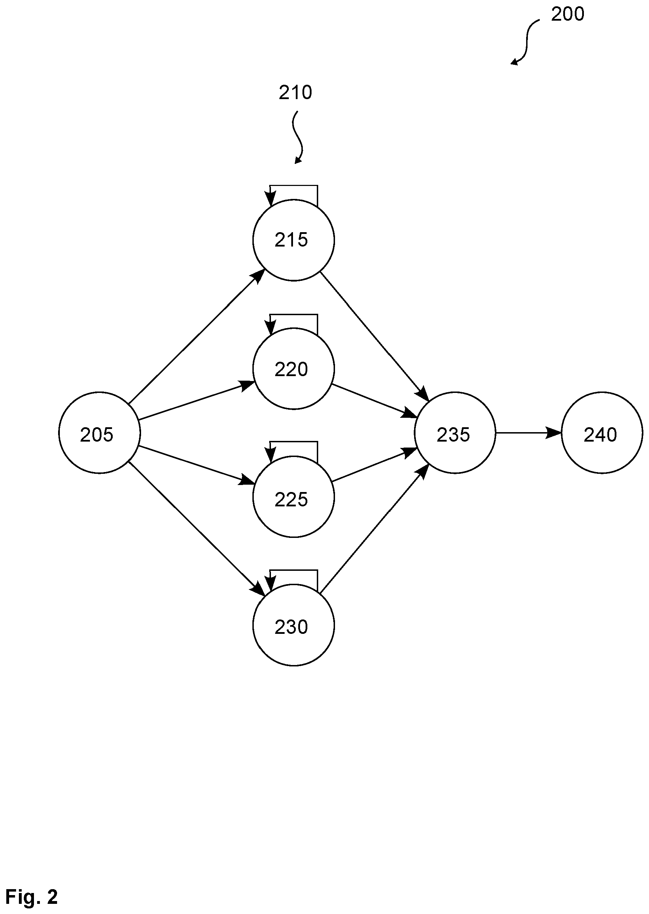

Figur 2 zeigt ein Ablaufdiagramm eines Verfahrens 200 zum Bestimmen, ob der Vorrat an Kaffeebohnen 120 der Kaffeemaschine 100 erschöpft ist. Dargestellte Verfahrensschritte können durch Funktionsblöcke ausgeführt werden, die bevorzugt durch die Verarbeitungseinrichtung 140 gebildet sind.

In einem Schritt 205 kann eine Stromstärke gemessen bzw. ein Messwert erfasst werden. Die Stromstärke kann an einer mit Wechselstrom betriebenen Antriebsmaschine 125 beispielsweise bestimmt werden, indem für jede Halbwelle eine durchschnittliche Stromstärke bestimmt wird. Die Stromstärke kann am Sensor 135 als Spannungswert erfasst werden. Bevorzugt wird die Stromstärke digitalisiert, um verbessert weiter verarbeitet werden zu können. Messungen der Stromstärke werden bevorzugt in gleichmäßigen zeitlichen Intervallen bereitstellt. Ein bereitgestellter Wert kann einem Mittelwert mehrerer Messungen entsprechen.

In einem Schritt 210 wird ein bestimmter Wert für die Stromstärke an eine Schicht von vier parallel geschalteten LSTMs 215 - 230 geleitet. Die LSTMs 215 - 230 sind darauf trainiert, einen Übergang in der Stromstärke zu erkennen, der darauf hinweist, dass der Vorrat an Kaffeebohnen 120 erschöpft ist. Ausgänge der LSTMs 215 - 230 werden in einem Schritt 235 zusammengefasst. Dazu kann insbesondere eine vollverbundene Schicht ("dense layer") eingesetzt werden. Die letzte Schicht bestimmt auf der Basis von Ausgangssignalen der LSTMs 215 - 230 einen Wahrscheinlichkeitswert dafür, dass der aktuelle Stromwert bzw. eine Anzahl zuletzt bestimmter Stromwerte auf ein Erschöpfen des Vorrats an Kaffeebohnen 120 für die Kaffeemühle 100 hinweist. Zu einem empfangenen Stromwert stellt die letzte Schicht bevorzugt einen Wahrscheinlichkeitswert bereit, sodass passend zu der Reihe von Stromwerten eine Reihe von Wahrscheinlichkeitswerten bereitgestellt wird.

In einem Schritt 240 kann ein Wahrscheinlichkeitswert oder eine Abfolge einer vorbestimmten Anzahl Wahrscheinlichkeitswerte auf das Vorliegen einer vorbestimmten Eigenschaft untersucht werden. Eine erste beispielhafte Eigenschaft betrifft das Übersteigen eines vorbestimmten Schwellenwerts durch einen Wahrscheinlichkeitswert. Eine zweite beispielhafte Eigenschaft betrifft einen Gradienten einer vorbestimmten Stärke über eine vorbestimmte Anzahl Wahrscheinlichkeitswerte. Mehrere bestimmte Eigenschaften können mittels Boolescher Algebra in einer vorbestimmten Weise miteinander verknüpft werden, um einen binären Parameter bereitzustellen. Der Parameter kann einen ersten Wert einnehmen, der darauf hinweist, dass der Vorrat erschöpft ist, oder einen zweiten Wert, der darauf hinweist, dass der Vorrat nicht erschöpft ist.

Der bestimmte Parameter kann mittels der Ausgabevorrichtung 145 bereitgestellt werden.

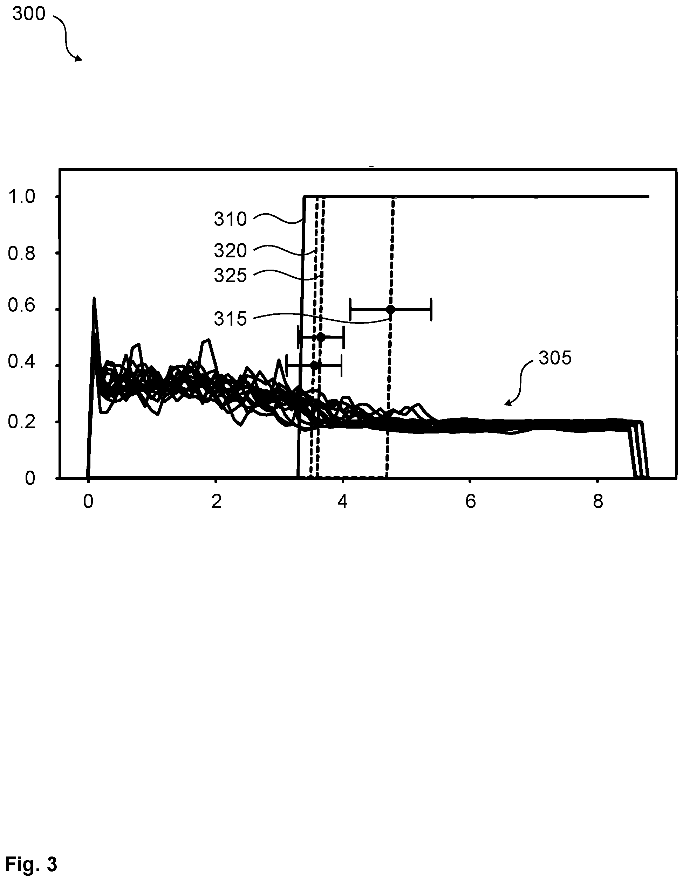

Figur 3 zeigt eine beispielhafte Darstellung 300 von Erkennungen des Erschöpfens. In horizontaler Richtung ist eine Zeit und in vertikaler Richtung eine Wahrscheinlichkeit angetragen. Die Darstellung 300 betrifft einen Mahlvorgang einer vorbestimmten Menge von Kaffeebohnen 120, wobei im Behälter 115 nicht ausreichend Bohnen 120 vorrätig sind, um den Mahlvorgang abzuschließen. Der Vorrat an Kaffeebohnen 120 erschöpft daher während des Mahlvorgangs. Der Darstellung 300 liegen 15 beispielhafte Mahlvorgänge unter gleichen Bedingungen zu Grunde.

Im unteren Bereich der Darstellung 300 sind einige erste Verläufe 305 dargestellt, die bestimmten Stromwerten während eines Mahlvorgangs entsprechen. Für die ersten Verläufe 305 ist in vertikaler Richtung die Stärke eines elektrischen Stroms in A angetragen.

Ein zweiter Verlauf 310 zeigt eine Bestimmung, die durch einen neutralen menschlichen Beobachter durchgeführt ist. Der zweite Verlauf 310 dient im Folgenden als Referenz, sodass bestimmt werden kann, wie schnell eine andere Bestimmung auf dasselbe Ergebnis kommt. Der Beobachter kann die Bestimmung zum Beispiel auf der Basis eines Augenscheins oder einer Geräuschentwicklung des Mahlwerks 110 treffen.

Ein dritter Verlauf 315 reflektiert eine Bestimmung nach dem Stand der Technik. In der Darstellung 300 wird hierzu ein Unterschied zwischen einem gleitenden Durchschnitt von Stromwerten und einem vorbestimmten konstanten Stromwert bestimmt. Ist der Unterschied größer als ein weiterer Schwellenwert, so wird auf ein Erschöpfen des Vorrats geschlossen.

Ein vierter Verlauf 320 zeigt eine Bestimmung mittels eines hierin beschriebenen RNN bezüglich eines absoluten Schwellenwerts. Ein fünfter Verlauf 325 zeigt eine entsprechende Bestimmung bezüglich eines vorbestimmten Gradienten.

Es ist zu erkennen, dass die Bestimmungen 320, 325 mittels RNN deutlich früher erfolgen als nach dem Stand der Technik 315. Während der Verlauf 315 das Erschöpfen mit einer Verzögerung von ca. 2,5 s bestimmt, erfolgt die korrekte Bestimmung nach dem Verlauf 325 bereits nach ca. 0,6 s, nach dem Verlauf 320 sogar bereits nach ca. 0,55 s. Damit ist die hierin vorgestellte Bestimmung um ca. 1,9 s schneller als die bekannte Technik. Die Erkennung 325 auf der Basis des Gradienten schlägt noch früher als die Erkennung 320 bezüglich des Schwellenwerts an.

Die folgende Tabelle zeigt die Zuverlässigkeit der hierin vorgeschlagenen Bestimmung. In einem beispielhaften Datensatz von 45 Mahlvorgängen übersah die Bestimmung 315 nach dem Stand der Technik 30 von 135 Erschöpfungen, was einer Genauigkeit von nur 78 % entspricht. Erschöpft der Vorrat im letzten Quartal des Mahlvorgangs (9g Ausgangsmenge), verschlechtert sich die Genauigkeit weiter auf ca. 40%. Ist der Behälter 115 bereits zu Beginn des Mahlvorgangs leer, so kann das Erschöpfen auf diese Weise überhaupt nicht erkannt werden.

Das hierin vorgestellte RNN Modell übersah hingegen nur ein einziges leeres Bohnenvorkommen, was einer Bestimmungsgenauigkeit von 99 % entspricht. Im unvorteilhaftesten Fall erkennt das RNN Modell einen leeren Behälter 115 bereits nach ca. 1,7 Sekunden. Falsche Erkennungen eines erschöpften Vorrats liefert weder das RNN Modell noch das bekannte Modell.

| Kategorie | Label (ideal) | Bestimmung nach Stand der Technik | Bestimmung mit RNN und abs. Schwelle | Bestimmung mit RNN und Gradient |
|---|---|---|---|---|
| unerkannt | - | 0 | 0 | 0 |
| ø Erkennungszeit [s] | 3,4 | 4,8 | 3,7 | 3,6 |
| Standardabweichung Erkennungszeit | - | 0,64 | 0,36 | 0,43 |

Selbstverständlich können beide Kriterien auch kombiniert ausgewertet werden, sodass ein Erschöpfen, das auf der Basis des Gradienten zunächst nicht erkannt werden kann, auf der Basis des Schwellenwerts erkannt werden kann.

### Bezugszeichen

- 100: Kaffeemühle
- 105: Kaffeemaschine
- 110: Mahlwerk
- 115: Behälter
- 120: Kaffeebohnen
- 125: Antriebsmotor
- 130: Steuergerät
- 135: Sensor
- 140: Steuervorrichtung
- 145: Ausgabevorrichtung

- 200: Verfahren
- 205: Stromstärke messen
- 215: erstes LSTM
- 220: zweites LSTM
- 225: drittes LSTM
- 230: viertes LSTM
- 235: letzte Schicht
- 240: Eigenschaft bestimmen

- 300: Darstellung
- 305: erster Verlauf: auf Basis eines Stromwerts
- 310: zweiter Verlauf: nach Augenschein
- 315: dritter Verlauf: Bestimmung nach Stand der Technik
- 320: vierter Verlauf: RNN mit absoluter Schwelle
- 325: fünfter Verlauf: RNN mit Gradient

## Patentansprüche

1. Verfahren (200) zum Bestimmen eines Vorrats (115) von Kaffeebohnen (120) für eine Kaffeemühle (100), wobei das Verfahren (200) folgende Schritte umfasst:
- Erfassen (205) einer Reihe zeitlich beabstandeter Stromaufnahmen eines elektrischen Antriebsmotors (125) der Kaffeemühle (100) während eines Mahlvorgangs;
- Bestimmen (215-235) einer Reihe von Wahrscheinlichkeiten, mit welcher der Vorrat (115) erschöpft ist, auf der Basis der bestimmten Stromaufnahmen mittels eines rückgekoppelten neuronalen Netzes oder mittels eines baumbasierten Algorithmus; und
- Bestimmen (240), dass der Vorrat (115) erschöpft ist, falls die Reihe von Wahrscheinlichkeiten eine vorbestimmte Eigenschaft aufweisen.

2. Verfahren (200) nach Anspruch 1, wobei die Eigenschaft das Überschreiten eines vorbestimmten Schwellenwerts umfasst.

3. Verfahren (200) nach Anspruch 1 oder 2 wobei die Eigenschaft umfasst, dass ein Gradient der Serie einen vorbestimmten Wert übersteigt.

4. Verfahren (200) nach Anspruch 3, wobei der Anstieg über eine vorbestimmte Zeit vorliegt.

5. Verfahren (200) nach einem der vorangehenden Ansprüche, wobei das rückgekoppelte neuronale Netz ein LSTM (215-230) umfasst oder der Baumbasierte Algorithmus einen Decision Tree, Random Forest, Adaboost, XG Boost und/oder Explainable Boosting Machine umfasst.

6. Verfahren (200) nach Anspruch 5, wobei das Netz eine Schicht mit vier LSTM-Zellen (215-230) umfasst.

7. Verfahren (200) nach Anspruch 5 oder 6, wobei das Netz eine letzte Schicht umfasst, deren Eingänge mit den Ausgängen aller LSTM-Zellen (215-230) verbunden ist.

8. Verfahren (200) nach einem der vorangehenden Ansprüche, wobei das rückgekoppelte neuronale Netz auf der Basis von Mahlvorgängen trainiert ist, bei denen der Vorrat (115) während des Mahlvorgangs erschöpft, von Anfang an erschöpft ist oder gar nicht erschöpft.

9. Verfahren (200) nach Anspruch 8, wobei die Mahlvorgänge mit unterschiedlichen Mahlgraden erfolgt sind.

10. Steuervorrichtung (140) für eine Kaffeemühle (100), wobei die Steuervorrichtung folgendes umfasst:
- einen Sensor zur Erfassung einer Stromaufnahme eines elektrischen Antriebsmotors (125) der Kaffeemühle (100); und
- eine Verarbeitungseinrichtung, die dazu eingerichtet ist, eine Reihe zeitlich beabstandeter Stromaufnahmen des Antriebsmotors (125) während eines Mahlvorgangs zu erfassen; auf der Basis der bestimmten Stromaufnahmen mittels eines rückgekoppelten neuronalen Netzes oder mittels eines baumbasierten Algorithmus eine Reihe von Wahrscheinlichkeiten zu bestimmen, mit welcher der Vorrat (115) erschöpft ist; und zu bestimmen, dass der Vorrat (115) erschöpft ist, falls die Reihe von Wahrscheinlichkeiten eine vorbestimmte Eigenschaft aufweisen.

11. Steuervorrichtung (140) nach Anspruch 10, ferner umfassend eine Ausgabevorrichtung (145) zur Bereitstellung eines Hinweises auf einen erschöpften Vorrat (115).

12. Kaffeemühle (100), umfassend eine Steuervorrichtung (140) nach Anspruch 10 der 11.

13. Kaffeemaschine (105), umfassend eine Kaffeemühle (100) nach Anspruch 12.
